# DEMANDE DE BREVET EUROPEEN

(11) **EP 4 733 500 A1**
(43) Date de publication de la demande: **29.04.2026**
(21) Numéro de dépôt: 25206477.9
(22) Date de dépôt: 02.10.2025
(51) Int. Cl.: E04B 1/76

(54) **SYSTÈME DE FIXATION DE PANNEAUX ISOLANTS SUR UN MUR**

(30) Priorité: 25.10.2024 FR 2411671
(71) Demandeur: Perfix Industry, 67500 Haguenau (FR)
(72) Inventeur: KUCUK, Rahim, 67500 HAGUENAU (FR)
(74) Mandataire: Cabinet Bleger-Rhein-Poupon

(57) **Abrégé**

Système de fixation de panneaux isolants sur un mur, comportant une vis (3) placée d'une part dans une rosace (1) hélicoïdale apte à être vissée dans le panneau isolant et d'autre part dans une cheville (2) distincte de la rosace (1) apte à être ancrée dans le mur, ladite vis (3) étant solidaire en rotation de la rosace (1) hélicoïdale. La cheville (2) comporte :
- un tronçon central (21) raccordé à la rosace (1) au moyen d'un manchon (11) solidaire de ladite rosace (1) insérable dans ledit tronçon central (21) de la cheville (2) et libre en rotation et en translation dans le tronçon central (21) ; et
- un tronçon terminal (22) distal de la rosace (1) déformable au moins radialement ;
le tronçon terminal (22) présentant un diamètre inférieur à celui du tronçon central (21) dont il est séparé par une portion tronconique (26) formant butée contre le mur.

## Description

L'invention concerne très généralement l'isolation thermique et plus particulièrement un système de fixation de panneaux isolants sur un mur. De tels panneaux d'isolation thermique sont par exemple des panneaux en polystyrène (ou en laine de roche, en laine de verre, ou encore en fibre de bois, etc.) qui sont accolés et fixés aux murs existants et servent ensuite de support à une couche finale d'enduit. Pour leur fixation à une maçonnerie porteuse telle qu'un mur de bâtiment, on utilise des éléments de fixation individuels qui sont couplés à des vis, qu'on installe successivement après avoir foré des trous dans les murs recouverts par les panneaux isolants, chaque panneau étant finalement fixé au mur par quelques-uns de ces éléments de fixation.

Certains de ces éléments connus sont fabriqués d'une seule pièce en plastique, insérés à travers un trou du panneau isolant dans un trou pratiqué dans le mur et ancrés dans ledit mur en enfonçant une goupille d'expansion ou en vissant une vis d'expansion. Dans certains cas, l'élément de fixation est muni d'une plaque d'extrémité qui repose sur l'extérieur du panneau isolant, dans lequel elle est légèrement enfoncée de manière à ne pas dépasser de l'extérieur du panneau isolant. L'élément de fixation comprend une tige de cheville présentant une zone d'expansion située au niveau d'une extrémité opposée à celle qui comporte la plaque d'extrémité, qui est la partie qui s'insère dans le mur. La vis est enfoncée dans le corps de la cheville après insertion, provoquant l'expansion de la cheville dans le trou pré-percé et le blocage de l'ensemble vis/cheville.

Selon une variante également connue, les plaques reposant sur les panneaux sont remplacées par des rosaces hélicoïdales qui se vissent dans lesdits panneaux et deviennent invisibles de l'extérieur, rosaces dont le diamètre est trois à quatre fois supérieur au diamètre de la cheville proprement dite. La rosace constitue en fait une pièce de vissage élargie située au niveau de la tête de la vis, dont l'hélice aide à maintenir le panneau isolant en place contre le mur. Son diamètre est prévu large pour bien répartir la pression sur l'isolant et éviter de le perforer.

Dans une configuration existante, la rosace est distincte de la cheville et elle s'appuie contre une portion en tissage plastique de ladite cheville qui s'écrase lorsque la vis y est vissée, de sorte qu'il n'y a pas de réutilisation possible. Cette portion de la cheville en tissage plastique débouche, à l'opposé de son raccord à la rosace hélicoïdale, sur une portion centrale plus rigide qui est prévue pour s'appuyer en butée contre le mur, à l'aide de nervures axiales extérieures à ladite portion centrale. Une portion terminale formant l'extrémité libre de la cheville, distale de la rosace, est prévue pour s'enfoncer dans l'orifice pratiqué dans le mur et s'y expandre radialement lorsque la vis y pénètre.

Une autre conception de dispositif de fixation de panneaux isolants, décrite dans le document EP 2 213 888, comporte également une configuration à rosace hélicoïdale s'appuyant sur la cheville, qui ne comporte que deux portions : une portion proximale de la rosace qui peut s'écraser axialement lorsque la vis y est vissée, et qui comporte des nervures axiales extérieures destinées à faire butées contre le mur, et une portion distale de la rosace qui est prévue pour être insérée dans le mur et qui s'élargit radialement lorsque la vis y pénètre. Les nervures extérieures subissent elles-mêmes une déformation lors du vissage, mais elles continuent à faire office de butées. Ces systèmes sont non réutilisables.

De tels éléments de fixation de panneaux isolants sont employés de la manière suivante : un trou est d'abord percé dans le mur à travers le panneau isolant, avec un diamètre adapté à la taille de la cheville. Le pré-perçage traverse à la fois l'isolant et le matériau du mur (béton, brique, parpaing, etc.). Une fois la cheville en place, une vis - parfois actionnée en même temps que la rosace - est enfoncée dans le corps de la cheville. Cela provoque l'expansion de la partie interne de la cheville contre les parois du conduit percé dans le mur, assurant une fixation solide. L'expansion crée une friction suffisante pour maintenir l'ensemble. La rosace large a pour effet de répartir les contraintes en pression exercées sur le panneau isolant, évitant ainsi d'endommager le matériau d'isolation, souvent fragile. Cette pression est importante pour maintenir l'isolant correctement plaqué contre le mur, sans créer de points faibles qui pourraient compromettre l'efficacité thermique de la couverture isolante.

L'objectif de l'invention est de fournir un système de fixation d'un type analogue à ceux qui ont été présentés auparavant, mais dont la conception est optimisée et l'usage aisé. En particulier, les systèmes de fixation de l'invention sont réutilisables et leur partie extérieure au mur, incluse dans le panneau isolant, bénéficie d'une rigidité accrue facilitant le vissage axial. Du fait de la configuration spécifique de l'invention, la vis est de fait directionnellement très bien guidée par la partie de la cheville intégrée au panneau isolant, qui conserve sa tenue mécanique pendant l'opération de fixation.

A ces effets, le système de fixation de panneaux isolants de l'invention, comporte de manière connue une vis placée d'une part dans une rosace hélicoïdale apte à être vissée dans le panneau isolant et d'autre part dans une cheville distincte de la rosace apte à être ancrée dans le mur, ladite vis étant solidaire en rotation de la rosace hélicoïdale.

Selon l'invention, ledit système de fixation est tel que la cheville comporte :
- un tronçon central raccordé à la rosace au moyen d'un manchon solidaire de la rosace insérable dans ledit tronçon central de la cheville et libre en rotation et en translation dans le tronçon central ; et
- un tronçon terminal distal de la rosace déformable au moins radialement ;
le tronçon terminal présentant un diamètre inférieur à celui du tronçon central dont il est séparé par une portion tronconique formant butée contre le mur.

La partie de la cheville pénétrant le mur et la partie qui reste dans le panneau isolant sont donc séparées par la portion tronconique qui vient buter contre la périphérie de l'orifice au débouché du percement préalablement effectué dans le mur, et qui freine/stoppe ses déplacements. La rosace hélicoïdale présente un diamètre de quelques centimètres (typiquement 5 à 6 cm), son hélice hélicoïdale lui permettant de pénétrer plus facilement dans le matériau isolant tout en préservant l'aspect extérieur de la couche isolante. Le fait que la rosace présente un manchon qui est apte à s'insérer dans le tronçon central du corps de la cheville permet l'obtention d'une double paroi pour ledit tronçon, qui garantit une robustesse et une rigidité de cette partie suffisante pour bien guider l'utilisateur dans son effort dans la direction d'installation - souvent horizontale - même lorsqu'un obstacle est rencontré durant l'opération de fixation. La pénétration axiale du manchon de la rosace dans le tronçon central de la cheville, qui résulte en fait de la libre rotation de l'un dans l'autre, conduit en effet à une double épaisseur sur au moins une fraction de cette partie logée dans la panneau isolant, partie qui est moins bien tenue car entourée par le matériau isolant par définition moins rigide/solide que le mur, mais qui est importante en termes de guidage.

De préférence, le tronçon central de la cheville peut être de longueur similaire à la longueur du manchon de la rosace hélicoïdale. Les deux longueurs sont du même ordre, de sorte que la position finale du manchon dans le tronçon central aboutit à doubler l'épaisseur de la quasi-totalité dudit tronçon. Au début du processus de fixation, l'opérateur insère, dans l'orifice préalablement foré dans le panneau isolant et le mur, le système de l'invention dont les trois composants (cheville, rosace, vis) sont assemblés. A ce stade, l'assemblage de la rosace à la cheville est tel que le manchon n'y est guère enfoncé : il est maintenu largement à l'extérieur de la cheville, et l'extrémité de la vis qui est insérée dans l'ensemble rosace / cheville raccordés se trouve au voisinage de la portion tronconique, pas ou peu engagée dans le tronçon terminal de la cheville. A l'aide d'un outil rotatif spécifique, la vis est ensuite entraînée en rotation, avec la rosace qui lui est solidaire, dans la cheville. Le manchon tourne par conséquent dans le tronçon central de la cheville et progresse en translation jusqu'à arriver en butée, constituant ainsi la double paroi qui renforce cette partie centrale du système de fixation de l'invention maintenue dans le panneau isolant.

Le tronçon central de la cheville comporte de préférence au moins une fente axiale, qui est notamment fonctionnellement utile lors d'une application du système dans un mur creux : au vissage, lorsque la vis solidaire de la rosace s'enfonce suffisamment dans la cheville, la ou les fentes axiales facilitent une torsion du tronçon central de manière à permettre à l'extrémité de la vis de progressivement sortir du tronçon terminal de la cheville afin qu'il puisse se torsader, se déformant alors radialement. Il augmente en fait ses dimensions transversales et réduit en même temps sa longueur axiale. L'augmentation de ses dimensions dans un plan transversal, jusqu'à créer une sorte de boule, aboutit à bloquer la cheville au contact de la face intérieure du mur creux, matérialisant la fixation du système de l'invention. La fente axiale peut par exemple être rectiligne.

Selon l'invention, le tronçon terminal de la cheville distal de la rosace hélicoïdale comporte également au moins une fente axiale. Dans un mur plein, ladite fente placée à ce niveau facilite une expansion radiale de ce tronçon dans le mur, conduisant à y bloquer la cheville par friction. On a vu que ce tronçon peut se torsader dans un mur creux : de préférence, la fente axiale du tronçon terminal se développe alors en zig-zag, forme qui facilite la déformation correspondante. L'aspect compact que prend ce tronçon terminal après constitution du volume torsadé réalise en pratique une butée intérieure empêchant de ressortir la cheville du mur creux, c'est-à-dire que l'ensemble du système de fixation de l'invention est bloqué dans le mur, contribuant à fixer correctement les panneaux isolants.

Par ailleurs, selon l'invention, le tronçon terminal peut comporter des bossages extérieurs destinés à augmenter la friction avec le conduit percé dans le mur préalablement à l'introduction de la cheville. Suivant une possibilité, les bossages extérieurs peuvent en pratique prendre la forme de bourrelets périphériques, qui se développent circulairement dans un plan transversal au tronçon terminal, c'est-à-dire perpendiculairement à l'axe de la cheville. De préférence, chaque bourrelet du bossage périphérique peut comporter au moins une section occupant une fraction de la périphérie dudit tronçon terminal. Leur apparence est celle d'anneaux périphériques interrompus formant des reliefs sur la face extérieure du tronçon terminal.

Ces bossages permettent de mieux assurer l'immobilisation en rotation de la cheville au cours de la première phase de vissage de l'ensemble solidaire vis/rosace jusqu'à ce que le manchon de la rosace arrive en butée dans le tronçon central de la cheville. Pour améliorer encore leur effet de friction, les bossages peuvent être constitués par une pluralité de bourrelets périphériques parallèles.

D'autres buts et avantages de la présente invention apparaîtront au cours de la description qui va suivre, se rapportant à un mode de réalisation qui n'est donné qu'à titre d'exemple indicatif. La compréhension de cette description sera en particulier facilitée en référence aux figures jointes en annexe et dans lesquelles :
La figure 1 montre une vue en perspective des trois composants du système de fixation de panneaux isolants de l'invention ;
La figure 2 représente une vue en élévation de face de la rosace ;
La figure 3 reprend les trois composants illustrés en figure 1, en une vue de côté ; et
La figure 4 est une vue en coupe axiale de la figure 3.

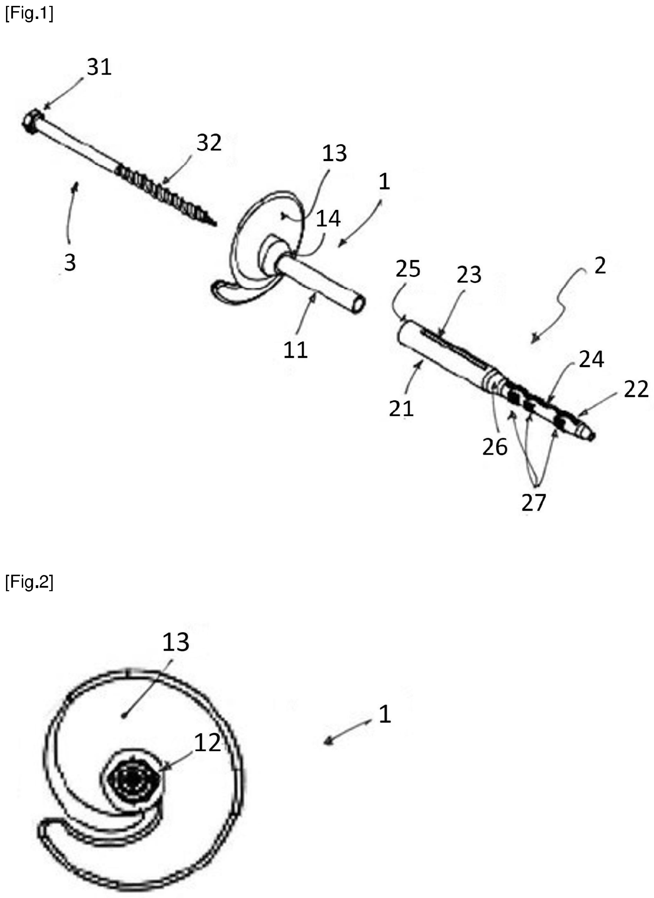

En référence à la figure 1, le système de fixation de panneaux isolants de l'invention comporte trois composants, à savoir une rosace 1, une cheville 2 et une vis 3 qui vient s'enfoncer axialement dans les conduits centraux qui se trouvent dans les deux composants précédents. Un manchon 11 d'un seul tenant avec la rosace 1 est conçu pour s'insérer dans le conduit intérieur d'un tronçon central 21 de la cheville 2, qui se prolonge - via une portion tronconique 26 destinée à former une butée à l'interface entre le panneau isolant et le mur - par un tronçon distal 22 de la rosace 1, que l'on désignera dans la suite par tronçon terminal 22. La rosace 1 comporte une hélice 13 dont l'encombrement transversal maximal est de l'ordre de 6 cm, et elle peut donc être raccordée à la cheville 2 par le manchon 11. Le diamètre de l'hélice 13 garantit que la pression est correctement répartie lorsqu'elle pénètre dans le panneau. Au début du processus de fixation d'un panneau isolant au moyen d'un système de fixation tel qu'il apparaît en figure 1, seule l'extrémité libre du manchon 11 est insérée dans le conduit intérieur du tronçon central 21, de sorte qu'il est encore largement visible. Le tronçon central 21 comporte par ailleurs une fente 23 rectiligne axiale visible en figure 1, qui offre audit tronçon 21 une possibilité de torsion. Une fente en zig-zag 24 également visible sur la figure 1 équipe par ailleurs le tronçon terminal 22 de la cheville 2.

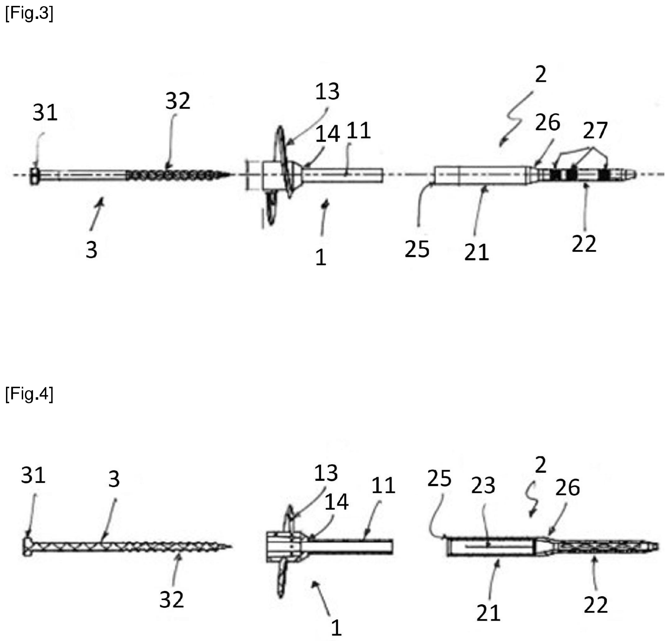

La tête 31 de la vis 3 est en l'occurrence à six pans, et lorsqu'elle est actionnée au moyen d'un outil adéquat, elle entraîne en rotation la rosace 1 puisqu'elle lui est solidaire via un logement 12 visible en figure 2, épousant la forme des six pans de la tête 31 de la vis 3. Lorsque la vis 3 tourne dans la cheville 2, sa portion filetée 32 engagée dans la paroi interne de la cheville 2 entraîne un déplacement axial de ladite vis 3 par conséquent transmis à la rosace 1. La rotation/translation imprimée à l'ensemble vis 3 / rosace 2 entraîne la pénétration progressive du manchon 11 dans le tronçon central 21 de la cheville 2. Les figures 3 et 4 illustrent bien le fait que les longueurs respectives du manchon 11 et du tronçon central 21 sont pratiquement égales, de sorte que lorsque le manchon 11 est en bout de course dans ledit tronçon central 21, au cours du processus de fixation, pratiquement toute la partie centrale du système de fixation de l'invention située entre la rosace 1 et la portion terminale 22 de la cheville 2 présente une double épaisseur de paroi, qui la rend bien plus rigide et apte à mieux conserver et conduire, directionnellement parlant, la direction de fixation (en général horizontale) propre aux opérations de fixation des panneaux isolants à un mur.

Le manchon 11 vient en butée dans le tronçon central 21 lorsqu'un épaulement 14 placé à la base de la rosace 1 arrive au contact du bord circulaire libre 25 dudit tronçon central 21. Dans ce cas, l'extrémité libre du manchon 11 se retrouve au voisinage de la portion tronconique 26 qui sépare les deux tronçons respectivement central 21 et terminal 22. Le tronçon terminal 22 présente une largeur inférieure à celle du tronçon central 21, le différentiel de largeur étant comblé par la portion intermédiaire tronconique 26. Ce tronçon terminal 22 est par ailleurs constitué différemment du tronçon central 21, leurs fonctions respectives n'étant pas les mêmes en vue de la fixation finale. Ainsi, le tronçon terminal 22 doit présenter une flexibilité suffisante pour pouvoir être torsadé, ou plus généralement déformé de manière à augmenter ses dimensions radiales (souvent au détriment de la dimension axiale), en vue de pouvoir empêcher tout retrait du système de fixation lorsqu'il est fiché dans un mur creux. Selon une possibilité, c'est notamment la fente axiale en zigzag 24 qui facilite cette déformation, lorsque la vis 3 continue de tourner dans le tronçon terminal après que le manchon 11 soit en butée dans le tronçon central 21 de la cheville 2.

La longueur de la vis 3 est prévue de sorte que lorsque le manchon 11 de la rosace 1 est dans la configuration initiale du système de fixation de l'invention, c'est-à-dire prêt à l'emploi avec le manchon 11 en début d'insertion dans le tronçon central 21, l'extrémité libre de la vis 3 n'a pas d'effet d'expansion dans la portion terminale 22. La vis 3 est cependant enfoncée dans la cheville 2 de manière suffisante pour que le raccordement mécanique de la rosace 1 et de la cheville 2 soit stable. Dans ce cas, l'extrémité libre de la vis 3 se trouve au voisinage de la portion tronconique 26, ne pénétrant pas dans le tronçon terminal 22 de sorte à réaliser une expansion radiale. Il est alors possible d'insérer le système de l'invention complet, avec ses trois composants de base, dans un pré-perçage préalablement effectué dans le panneau isolant placé contre le mur puis dans le mur, de manière à y loger la cheville 2 et notamment à y faire pénétrer son tronçon terminal 22 le moins large dans le mur. La vis 3 est ensuite vissée, déplaçant axialement le manchon 11 de la rosace 1 dans le tronçon central 21 de la cheville 2 jusqu'à ce que l'épaulement 14 arrive en butée contre le bord circulaire libre 25 dudit tronçon 21. L'extrémité libre de la vis 3 s'enfonce alors dans le tronçon terminal 22, qu'elle expand de manière différente selon que le mur est plein ou creux.

Plus précisément, l'extrémité libre de la vis 3 progresse axialement à l'intérieur du tronçon terminal 22, et réalise une expansion transversale progressive par une déformation radiale de ce tronçon 22 dont l'amplitude augmente à mesure de son avancée. Dans un mur plein, cela se traduit par un serrage de plus en plus contraint du tronçon terminal 22 en cours d'expansion dans la paroi périphérique du pré-perçage, accentué par les bossages extérieurs 27 équipant le tronçon terminal 22, notamment visibles en figures 1 et 3. Dans un mur creux, le tronçon terminal 22 non contraint par une paroi qui l'entoure peut s'entortiller autour de l'extrémité de la vis 3 en rotation, ladite extrémité traversant alors l'extrémité libre du tronçon 22 distal de la tête 31 de vis 3 et accentuant l'entortillement de la cheville 2. Le tronçon 22, lorsqu'il se torsade contre la face interne du mur creux, voit sa longueur diminuer et son épaisseur augmenter sensiblement du fait de la formation d'une « boule » au contact de ladite face interne du mur. La rotation de la vis, qui ne progresse presque plus dans une direction axiale (sauf légère torsion du tronçon central 22 facilitée par la fente axiale 24) dès lors que la rosace 1 arrive en butée contre le tronçon central 22, crée de fait une butée.

La cheville 2 et la rosace 1 des systèmes de fixation décrits ci-dessus sont fabriqués dans des moules placés dans des machines à injection de plastique alimentées par des granulés d'un matériau plastique choisi, que la machine fait fondre avant d'injecter le matériau fondu dans lesdits moules. La rosace hélicoïdale est notamment fabriquée à l'aide de plastiques recyclés, ce qui rend le système de fixation de l'invention économiquement avantageux par rapport aux produits existants assurant la même fonction, d'autant que la cheville est réutilisable plusieurs fois.

L'exemple de configuration qui fait l'objet des figures ne représente qu'une possibilité de mise en œuvre de l'invention, et ne doit pas être considéré comme exhaustif de celle-ci. L'invention englobe au contraire d'autres formes ou configurations, comme par exemple diverses structures de tronçon terminal 22, ou d'autres formes ou nombre de fentes, ou encre d'autres formes de bossages périphériques, etc.

## Revendications

1. Système de fixation de panneaux isolants sur un mur, comportant une vis (3) placée d'une part dans une rosace (1) hélicoïdale apte à être vissée dans le panneau isolant et d'autre part dans une cheville (2) distincte de la rosace (1) apte à être ancrée dans le mur, ladite vis (3) étant solidaire en rotation de la rosace (1) hélicoïdale, **caractérisé en ce que** la cheville (2) comporte :
- un tronçon central (21) raccordé à la rosace (1) au moyen d'un manchon (11) solidaire de ladite rosace (1) insérable dans ledit tronçon central (21) de la cheville (2) et libre en rotation et en translation dans le tronçon central (21) ; et
- un tronçon terminal (22) distal de la rosace (1) déformable au moins radialement ;
le tronçon terminal (22) présentant un diamètre inférieur à celui du tronçon central (21) dont il est séparé par une portion tronconique (26) formant butée contre le mur.

2. Système de fixation de panneaux isolants sur un mur selon la revendication précédente, **caractérisé en ce que** le tronçon central (21) de la cheville (2) est de longueur similaire à la longueur du manchon (11) de la rosace (1) hélicoïdale.

3. Système de fixation de panneaux isolants sur un mur selon la revendication précédente, **caractérisé en ce que** le tronçon central (21) de la cheville (2) comporte au moins une fente (23) axiale.

4. Système de fixation de panneaux isolants sur un mur selon la revendication précédente, **caractérisé en ce que** la fente (23) axiale est rectiligne.

5. Système de fixation de panneaux isolants sur un mur selon l'une des revendications précédentes, **caractérisé en ce que** le tronçon terminal (22) de la cheville (2) distal de la rosace (1) hélicoïdale comporte au moins une fente (24) axiale.

6. Système de fixation de panneaux isolants sur un mur selon la revendication précédente, **caractérisé en ce que** la fente (24) axiale du tronçon terminal (22) se développe en zig-zag.

7. Système de fixation de panneaux isolants sur un mur selon l'une des revendications précédentes, **caractérisé en ce que** le tronçon terminal (22) comporte des bossages (27) extérieurs.

8. Système de fixation de panneaux isolants sur un mur selon la revendication 7, **caractérisé en ce que** les bossages (27) extérieurs du tronçon terminal (22) prennent la forme de bourrelets périphériques.

9. Système de fixation de panneaux isolants sur un mur selon la revendication précédente, **caractérisé en ce que** chaque bourrelet du bossage (27) périphérique comporte au moins une section occupant une fraction de la périphérie dudit tronçon terminal (22).

10. Système de fixation de panneaux isolants sur un mur selon l'une des revendications 8 et 9, **caractérisé en ce que** les bossages (27) sont constitués par une pluralité de bourrelets périphériques parallèles.
